# EUROPEAN PATENT APPLICATION

(11) **EP 1 881 496 A1**
(43) Date of publication of application: **23.01.2008**
(21) Application number: 06405310.1
(22) Date of filing: 17.07.2006
(51) Int. Cl.: G11B 17/00, G11B 17/04, G11B 19/10

(54) **Optical disk drive and method for operating an optical disk drive**

(71) Applicant: Al-Askari, Ra'ad, 8002 Zürich (CH)
(72) Inventor: Al-Askari, Ra'ad, 8002 Zürich (CH)
(74) Representative: Schneider Feldmann AG Patent- und Markenanwälte

(57) **Abstract**

An optical disc drive (2) for optical discs (9), comprises a retractable disc tray (1) with an opening (3) and a tray base (33) on which a disc (9) with non-circular shape can be placed and centered by a user when the tray (1) is in a deployed position. A shaft (30) with drive plate (31) and centering pin (32) is able to rotate the disc (9) when the tray (1) is in a retracted position during operation of the drive (2). The drive comprises first means (25, 27) arranged on the shaft and second means (26, 28) arranged around the shaft, the first means and the second means being able to interact with each other, and to stop the rotating shaft (30) in a predefined end position. Alternatively the drive (2) comprises means (11, 12, 14, 15) for determining the relative orientation of the disc (9) with non-circular shape in relation to an absolute rotation angle of the shaft (30) bearing the disc (9), in order to enable the drive (2) to rotate the shaft (30) with disc (9) into a position, in which the tray can be safely deployed.

## Description

### Technical Field

The present invention relates to an optical disc drive with a disc tray and a method for operating such an optical disc, according to the preamble of the independent claims.

### State of the Art

Optical discs, i.e. compact discs (CD), digital versatile discs (DVD), Blu-ray discs etc., have usually a round shape. Different systems exist for placing such discs in a corresponding drive. In the most common and widespread approach a disc is placed by a user on a retractable disc tray. The tray is then retracted into the housing of the drive, where a shaft comprising a drive plate and a centering pin is raised or pivoted, thereby lifting the optical disc. The shaft and the disc are then rotated with variable speed. To give a write/read head access to the layer carrying the optically stored data, the disc tray has an opening. After use the optical disc is lowered and deposited on the tray, and the tray is deployed.

A standard CD is circular and has a diameter of 12 cm; the so called Mini CD has a diameter of 8 cm. Standard disc trays have depressions with contours that allow the centered positioning of standard CDs with 12 and 8 cm diameter. Some modern variants of optical discs have shapes other than round. A well known example are CDs with the rectangular shape of a credit card respectively a business card, as disclosed in EP 1'004'116 B1.

Some types of such special shape CDs comprise elements that allow the centering of the CD in the 8 cm diameter tray base of a disc tray. Alternatively adapted disc trays may be used in optical disc drives which allow the centering of rectangular CDs. Such a disc tray is disclosed in applicant's patent US 6,483,795 B1, having a rectangular tray base in addition to the standard circular tray bases.

Thus such a tray solves the problem of centering a rectangular disc prior to retracting the tray into the drive. However, if a disc is used in an optical disc drive of the above described type, after end of operation the disc will be deposited on the tray in a random orientation. Depending on the orientation, the disc then may fall through the opening of the tray when the tray is deployed, which may cause damage to the disc drive.

### Summary of the Invention

An object of the present invention is to provide an optical disc drive with a disc tray and a method for operating such an optical disc, which do not show the above mentioned drawbacks.

These and other problems are solved by an optical drive with a disc tray and a method for operating such an optical disc according to the independent claims. Additional advantageous embodiments of the invention are described in the dependent claims.

The main principle of a disc drive according to the invention is the automatic positioning of the optical disc after use in a safe orientation relative to the disc tray. This is achieved by passive or active mechanisms, for example the determination of the rotational orientation of the optical disc during or after use, and the subsequent rotation of the optical disc into a safe orientation relative to the disc tray, or the rotation of the disc into a safe position by passive mechanical or electromagnetic means. With the disc being in such a position the tray can be ejected without the risk of the optical disc falling through the opening and damaging the drive.

### Brief Description of the Drawings

Exemplary embodiments of the invention are schematically illustrated in the drawings:

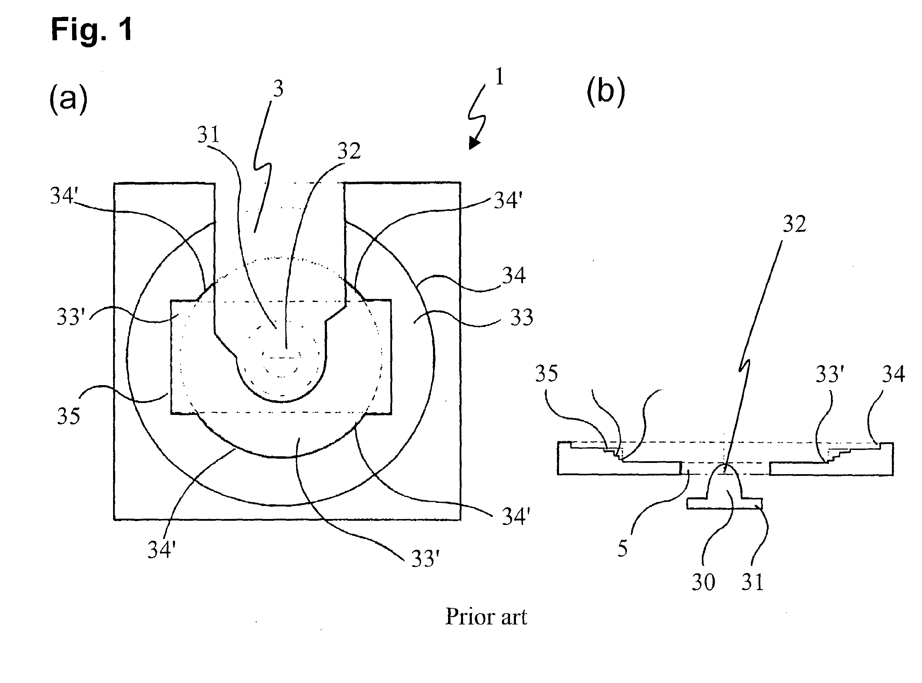

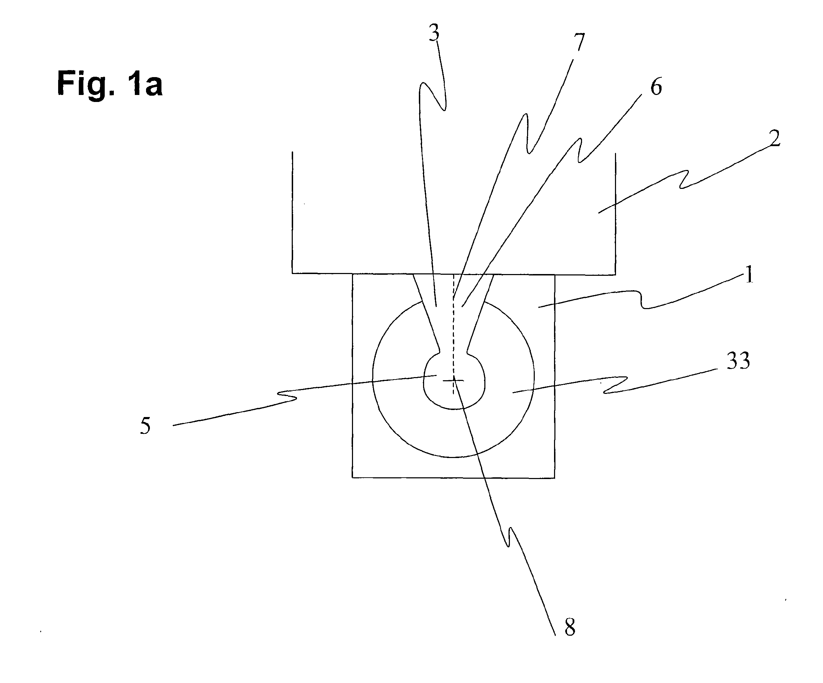

Figure 1 shows a prior art disc tray of an optical disc drive, adapted to center rectangular optical discs, in top view.
Figure 1 a shows disc drive with deployed disc tray, in top view.
Figure 2 shows the disc tray of Fig. 1 a with a rectangular optical disc placed on the tray, the optical disc being
   (a) in a preferred position;
   (b) in an orientation different to the preferred position; and
   (c) in another orientation different to the preferred position.
Figures 3a and 3b show an optical disc placed on the tray of a drive according to the invention, with a sensor element and a light emitting element, in cross-sectional view (Fig. 3a) and in top view (Fig. 3b).
Figure 3c shows the signal detected by the sensor element for a rotation of the disc of 360° around its axis.
Figure 4a shows another possible variant for the placement of the sensor and light emitting element, the disc being in the preferred position, in top view.
Figures 4b and 4c show the arrangement of Figure 4a, with the optical disc oriented in a less preferred way, in top view.
Figure 5a shows an optical disc placed in a tray with a sensor arm detecting the shape of the disc.
Figure 5b shows a record of the angle of the sensor arm during the rotation of the disc of 360° shows the signal detected by the sensor arm in Fig. 5a for a rotation of the disc of 360° around its axis.
Figure 6 shows a disc tray with a support temporarily closing the opening.
Figure 7 shows another embodiment of a disc drive according to the invention, with magnetic means rotating the disc into a safe position.
Figure 8 shows yet another embodiment of a disc drive according to the invention, with mechanical means rotating the disc into a safe position.

### Detailed description of the invention

Figure 1 shows a disc tray of an optical disc drive according to US 6,483,795 B1, in top view (a) and in cross-sectional view (b), as an example for the prior art. The disc tray 1 comprises to tray bases 33 and 33'. The tray base 33 with contour 34 is adapted to center an optical disc having the format of a standard CD with diameter 12 cm. In the retracted position of the tray 1, a shaft 30 with drive plate 31 and centering pin 32 is raised from below the tray 1 through the circular portion 5 of opening 3. The disc is lifted from the tray 1, centered on the centering pin 32. Supported by the drive plate 4 it is then set into rotation.

An analogous tray base 33' with contour 34' is adapted to center circular optical discs with smaller diameter (Mini CD, diameter 8 cm). The contour 34' is suplemented by a basically rectangular contour 35, adapted to center rectangular optical discs, i.e. discs in the shape of a credit card.

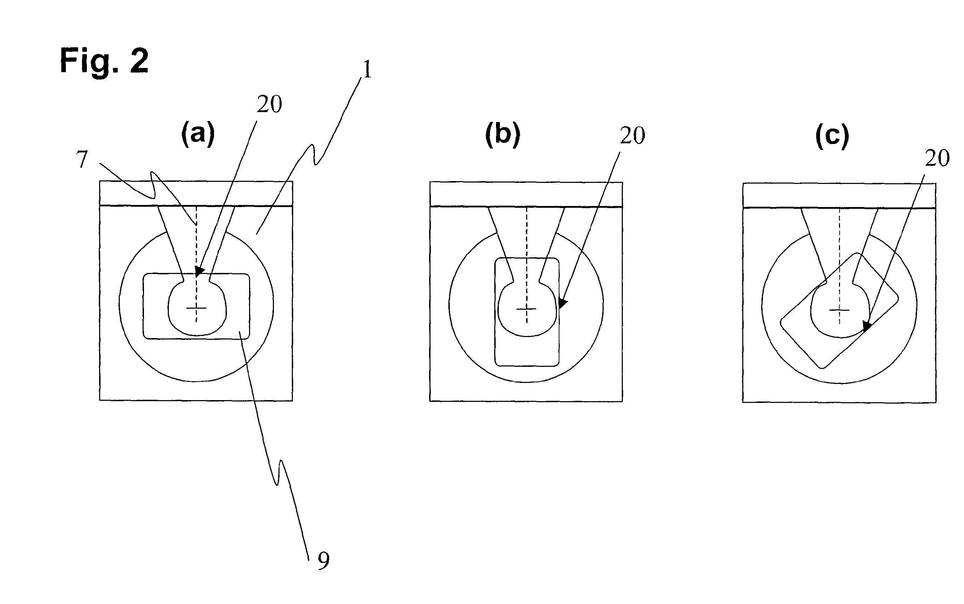

Figure 1a shows an optical disc drive 2 with deployed disc tray 1. The tray 1 comprises a shallow tray base 33 of the shape and size of a standard CD/DVD and an opening 3. The opening 3 comprises a central circular portion 5 a long portion 6. An optical disc is deposited by a user in the cavity 4 and the tray 1 is retracted into the housing of the drive 2. A shaft is lifted from below the tray through the circular portion 5 of opening 3 to engage in the central hole of the optical disc. The disc is lifted and then rotated at variable speed. The read/write head then reads the optically stored data, by means of a laser beam, through long portion 6 of opening 3. Figures 2(a), 2(b), and 2(c)c show the disc tray 1 of Figure 1a, with an inserted optical disc 9 having the rectangular shape of a credit card, in three different orientations. The orientation of the disc 9 in Figure 2(a) shall be called the preferred position. In the preferred position, the shortest distance, or, for symmetric discs, one of the shortest distances from the centre 8 of the disc 9 to its edge, to be called the close point 20, should be positioned on the center line 7 of opening 3. The disc 9 being deposited in such a preferred position, the tray 1 may be safely deployed from the housing, without a risk of damaging the drive by a disc falling through opening 3. In a disc drive according to Figure 1, the preferred position corresponds to the centering contour 35

In Figures 2(b) and 2(c) the disc 9 is in a position which is not safe for deployment. The disc 9 of Figures 2(b) and 2(c) is not sufficiently supported by the tray 1, and may fall through the opening 3 of the tray 1, possibly causing severe damage to disc 9, tray 1 and other parts of drive 2.

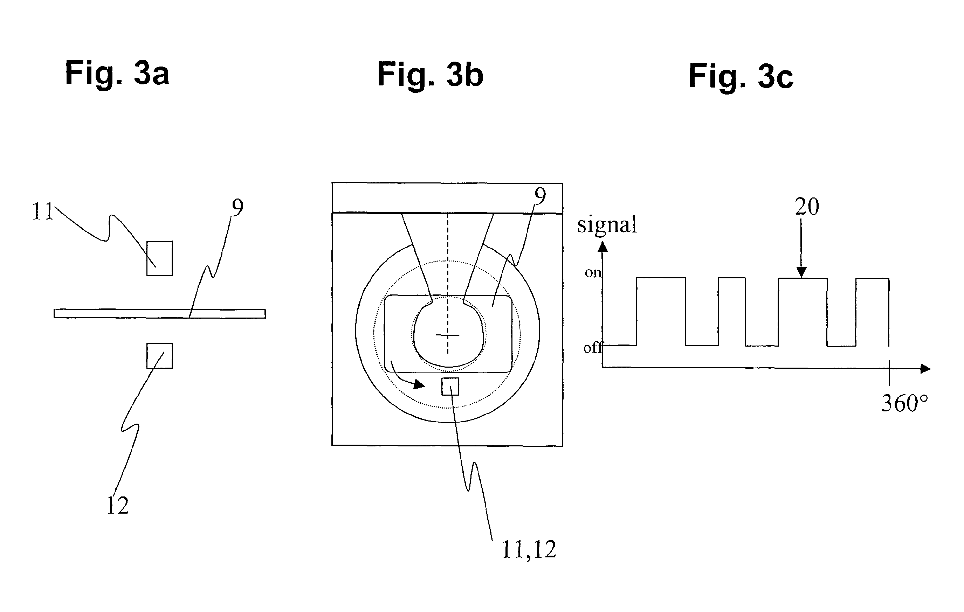

Figures 3a and 3b show a possible embodiment of a optical disc drive according of the invention. The tray 1 comprises a light emitting element 11, emitting electromagnetic radiation, particularly in the visible, UV or IR range, perpendicular to the plane of the disc 9. A corresponding sensor element 12 is arranged on the opposite side of the disc 9, as shown in Figure 3a in a cross sectional view.

The sensor element 12 and the light emitting element 11 are arranged in a way that a light beam 13 emitted from the light emitting element 11 may reach the sensor element 12 only in some specific rotational orientations of the disc 9, when no part of the disc 9 is interrupting light beam 13. The closer the position of the emitting element 11 and the sensor 12 to the center of circular part 5 of opening 3 (the rotational axis of shaft and disc during operation), the smaller the range of rotational angles of disc 9 at which the light beam 13 reaches sensor element 12. In any case the light beam should be able to reach sensor element 12 when the close point 20 of disc 9 lies on the center line 7 of opening 3 (Figure 3b).

During operation of the drive and rotation of disc 9, the sensor element 12 detects the intensity of the impinging light beam 13 as a function of the rotation angle of the shaft, resulting in a periodic on-off signal as shown in Figure 3c. The length of the on-off periods depends on the format of the rotating disc. The center of the longest on-period can be considered as the close point 20. Thus after one single rotation of the disc, the orientation of the optical disc 9 in relation to a predefined rotation angle of the shaft is determined.

In a preferred variant the determination of the orientation of the disc in relation to the shaft 9 takes place after end of operation of the disc drive. Based on this relative orientation angle the shaft is precisely rotated to an absolute angle at which the disc is in the preferred position, the close point of disc 9 being on the center line 7 of opening 3. The shaft is lowered, and the disc is deposited on the tray 1 in the centering tray base for rectangular discs. Now the tray 1 with disc 9 can be safely deployed.

This method according to the invention does not only work for rectangular discs 9, but also for discs with other shapes, such as oval or triangle, to name only a few. The arrangement of emitting and sensor elements 11, 12 may of course be varied. Particularly the positions of the elements 11,12 may be exchanged, more sensor elements may be used, etc. In a more advantageous embodiment the light emitting and sensor elements are arranged in fixed positions in the housing of the drive. If the tray is in the retracted operational position, he light beam passes through a small additional opening in the tray.

Instead of a special light emitting element the read/write laser of the drive may also be used to determine the shape and orientation of a disc.

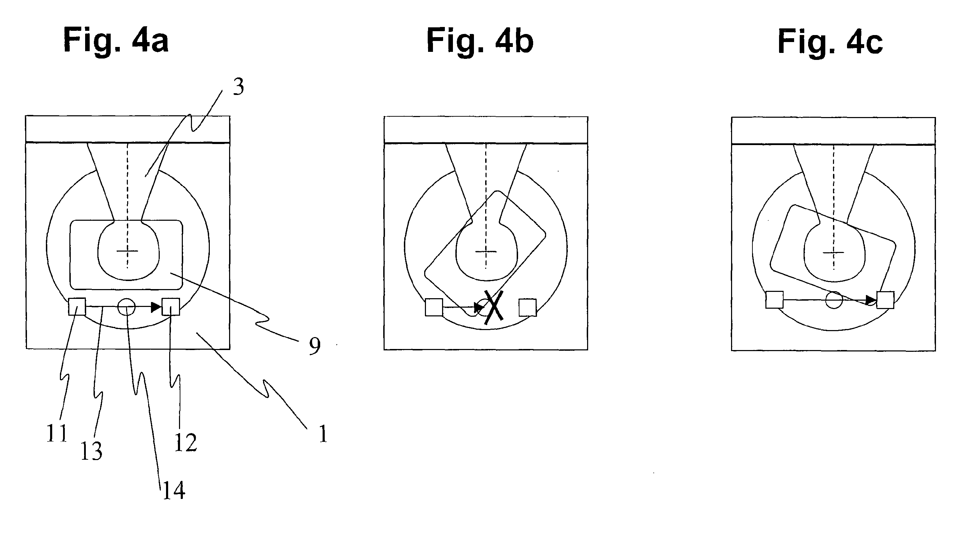

Figures 4a, 4b and 4c show yet another embodiment of a disc drive according to the invention, in which both sensor and light emitting elements 11,12 are placed inside the housing above the tray 1 in the retracted position, as shown in Figure 4a with the optical disc 9 in a preferred position and in Figures 4b and 4c with the disc 9 in non-preferred positions. A reflecting surface 14 is arranged on the tray 1 in a position where a light beam 13 from the light emitting element 11 is reflected to sensor element 12. When the rotating disc 9 passes the reflector element 14, the reflecting light beam 13 is interrupted. The method of determination of the close point 20 and rotation to the preferred position is according to the method described for Fig. 3.

In another embodiment of the invention mechanical means instead of optical means are used to determine the orientation of the disc.

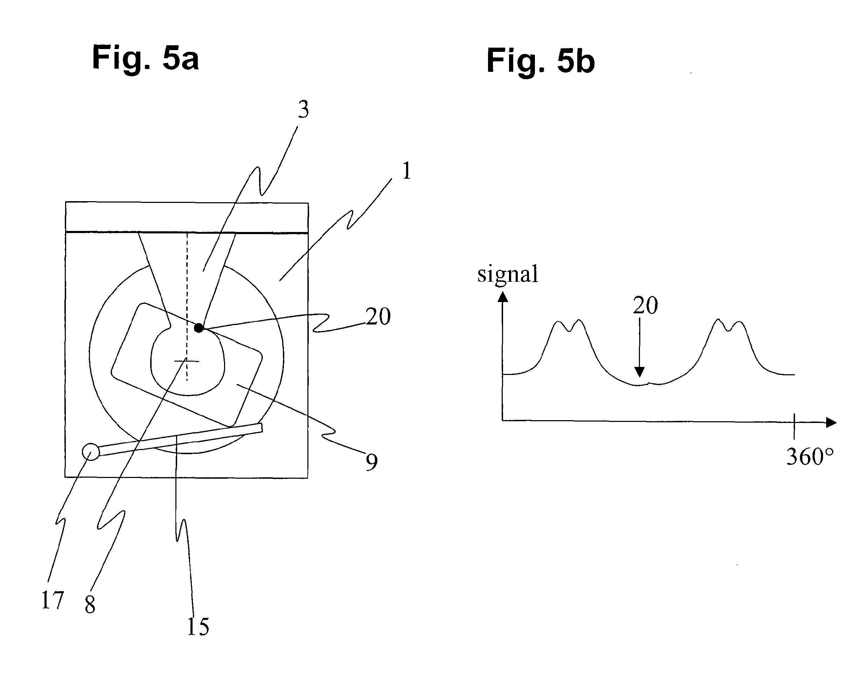

Figure 5a shows an embodiment of a drive according to the invention in which a sensor arm 15 determines the shape of a rotating disc 9. The arm 15 is pivoting around a bearing 17. It may be actively controlled by mechanical means or passively by a spring. An example of the measured angle of sensor arm 15 a function of the rotation angle of the shaft is given in Fig. 5b. The close point 20 of the disc 9 can be found by identifying the lowest point of the curve.

In an alternative embodiment the sensor arm 15 may be mounted on a bar (not shown) enabling the arm 15 to move radially outwards from the centre of the disc 9.

All variants of the method according to the invention described above may be performed at any time, before, during or after operation of the disc drive. Preferably the method is carried out after the reading/writing process has been finished, shortly before the tray with the disc is deployed.

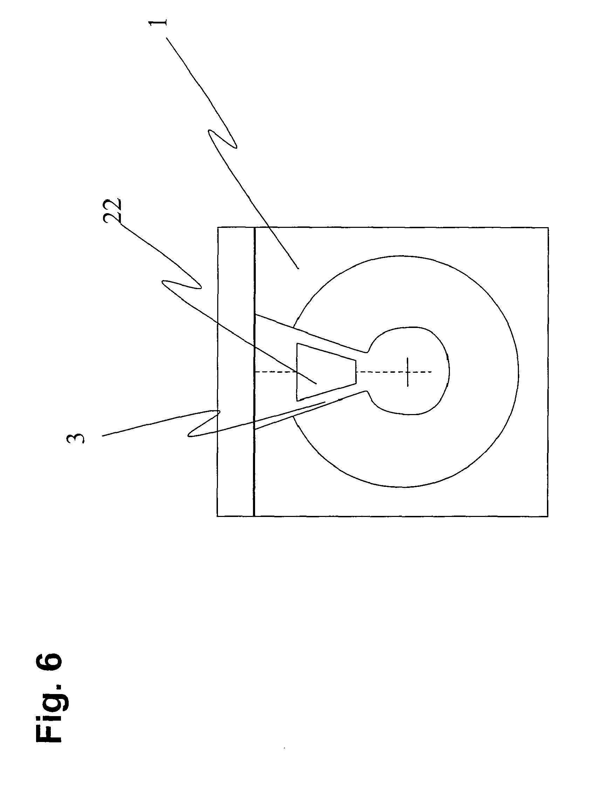

A different way to solve the problem is shown in Figure 6. Instead of rotating the disc 9 to a safe orientation, a supporting means 22, e.g. an arm or a plate, is temporarily arranged in the opening 3 of the tray 1 to prevent the disc 9 from falling through the opening 3.

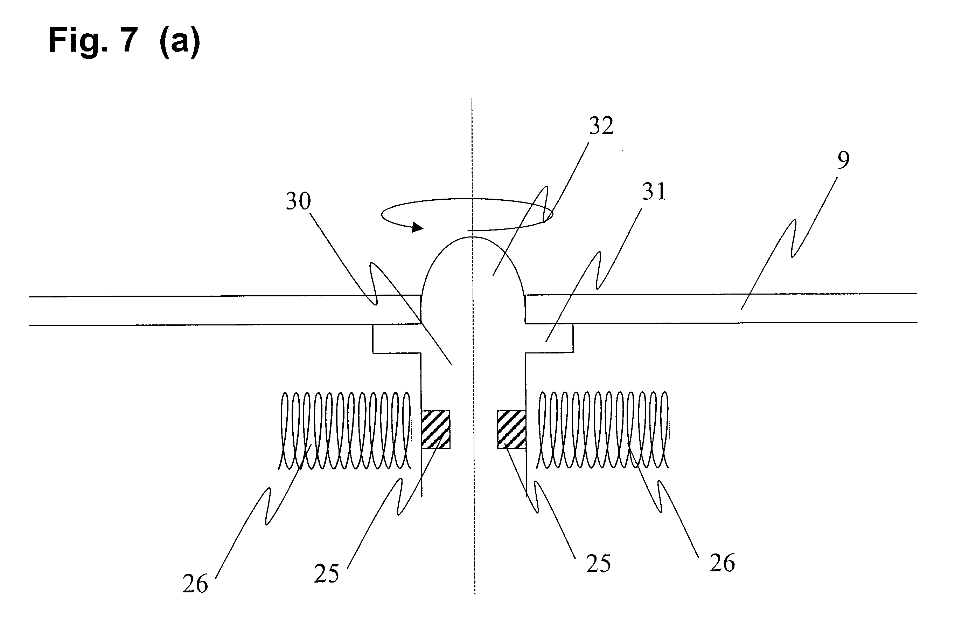

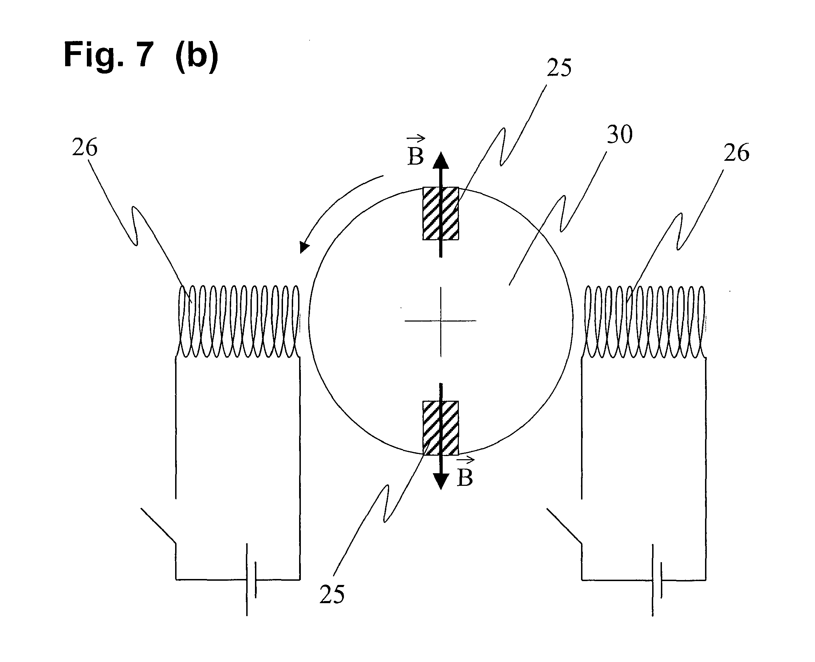

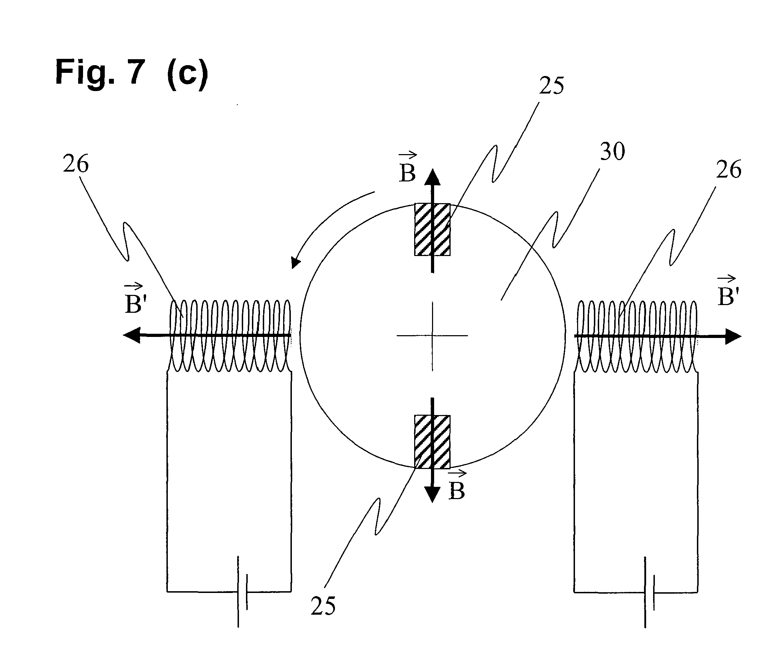

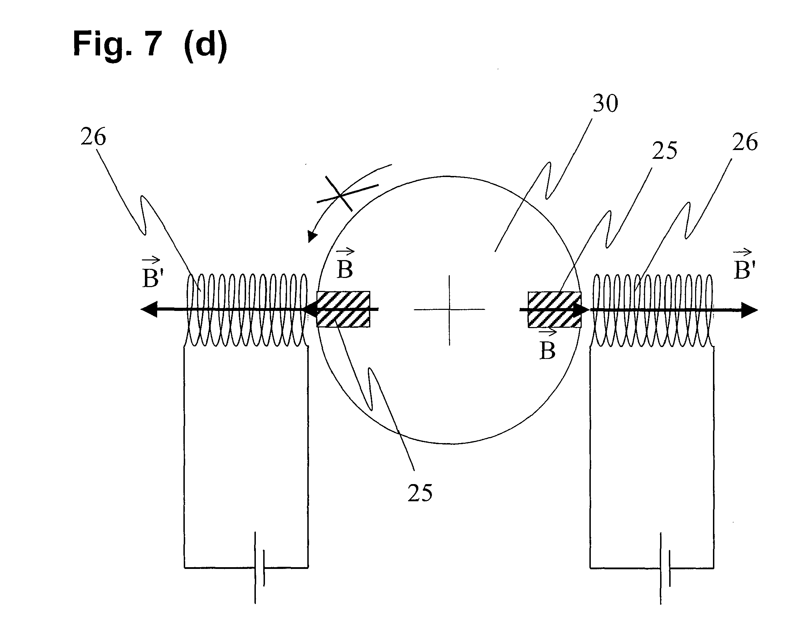

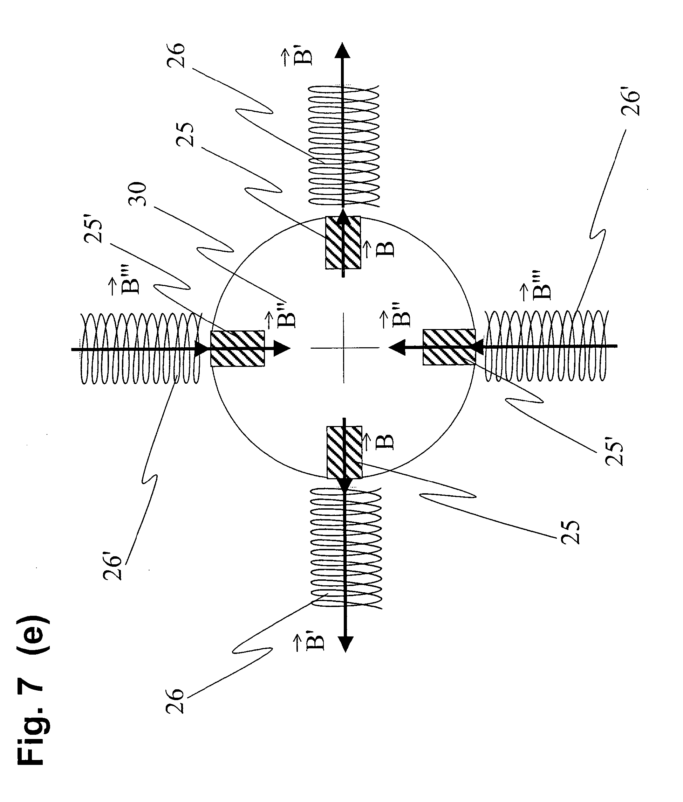

Figure 7 shows schematically another embodiment of a disc drive according to the invention, in which the disc is rotated after use into a safe position, by stopping the rotation of the shaft at a predefined rotation angle. In the embodiment illustrated in Figure 7, this is achieved by magnetic means.

Figure 7(a) schematically shows in a cross-sectional view the shaft 30 of a disc drive during operation, with a drive plate 31 and a centering pin 32, on which an optical disc 9 is engaged. During operation of the drive the shaft 30 is rotating at varying speed, which is controlled by the drive. After end of operation the electric motor (not shown) driving the shaft 30 is switched off. The shaft 30 will further continue to rotate with decreasing velocity until it finally stops. First magnetic means 25 are arranged in the shaft 30. Alternatively the means 25 may be externally attached to the shaft. These magnetic means 25 may be electromagnets, but permanent magnets are preferable.

Second magnetic means 26 are arranged around the shaft in close proximity to the first magnetic means 25. In the shown example the two second magnetic means 26 are electromagnets (schematically shown as coils), arranged on opposite sides of the shaft 30, which basically can be switched on and off, and which preferably can be driven at different levels. Alternatively the second magnetic means may be permanent magnets, which can be moved from a neutral position, in which they cannot interact with the first magnetic means, to an active position.

During operation the second magnetic means are switched off and do not interact with the first magnetic means 25 of the shaft, as schematically shown in Figure 7(b) in a cross-section through the rotation axis. The rotation of the shaft 30, driven by the motor means, is not influenced.

After end of operation the motor means is switched off, and the rotating speed of the shaft 30 decreases continually. When the rotating speed reaches a certain lower level, the second magnetic means 26 are switched on, preferably continually, and produce magnetic field vectors B' (Figure 7(c)). The magnetic field vectors should be oriented in the opposite direction than the magnetic field vectors B produced by the first magnetic means 25 of the shaft 30, in view of the rotation axis.

The rotational velocity will now decrease faster, since the interaction of the opposite magnetic field vectors has a retarding effect. Finally, as shown in Figure 7(d), the rotating shaft 30 comes to a rest position with minimum energy. The disc engaged with the shaft 30 will thus end up in a predefined orientation in relation to the disc tray. Since the shaft is locked by the magnetic means 25, 26 before and after operation, the orientation of the disc prior and after operation will also be the same. If the disc was correctly oriented on the tray before retracting the tray, it thus will also be correctly oriented after operation. The disc tray can be deployed without the risk of damaging the drive.

In a preferred embodiment additional first magnetic means 25' are arranged on the shaft and/or additional second magnetic means 26' are arranged around the shaft, as shown in Figure 7(e), with the shaft 30 being in the rest position. The orientation of the magnetic vectors B", B'" of the additional magnetic means 25', 26' is opposite to the field vectors of the neighboring magnetic means 25, 26'. Figure 7(e) shows a solution with four magnetic means, but 6, 8, or more magnetic means would also be possible. The embodiment of Figure 7(e) has the advantage that the positioning of shaft 30 is smoother.

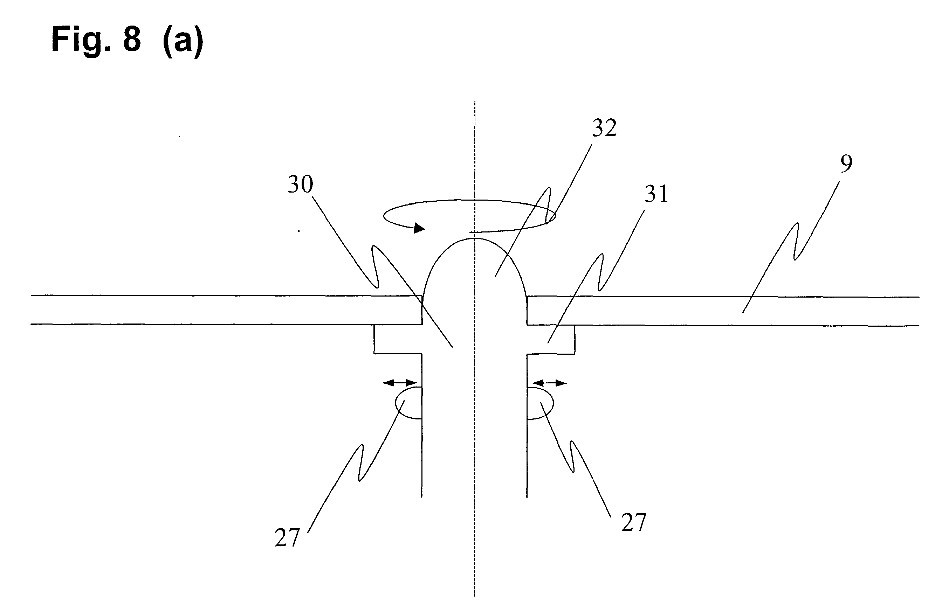

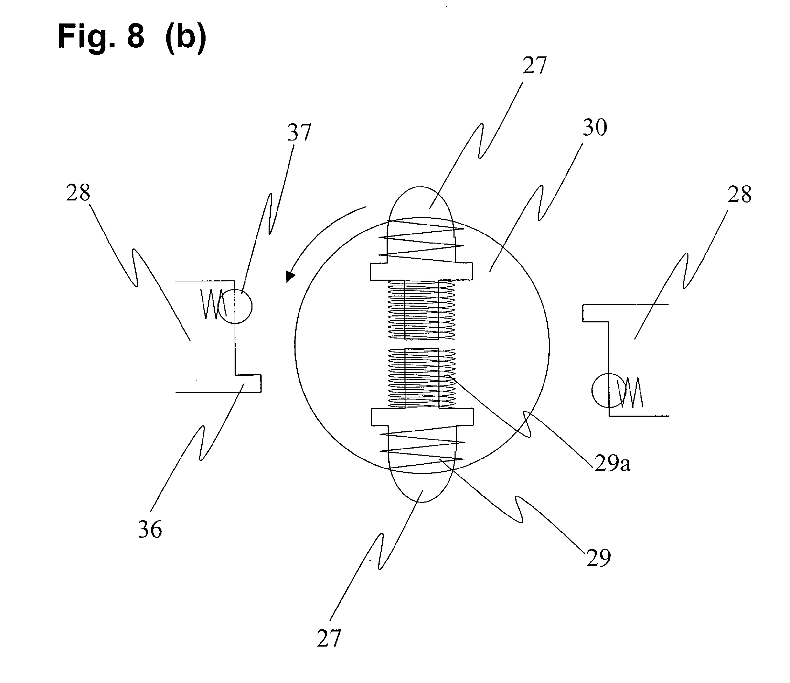

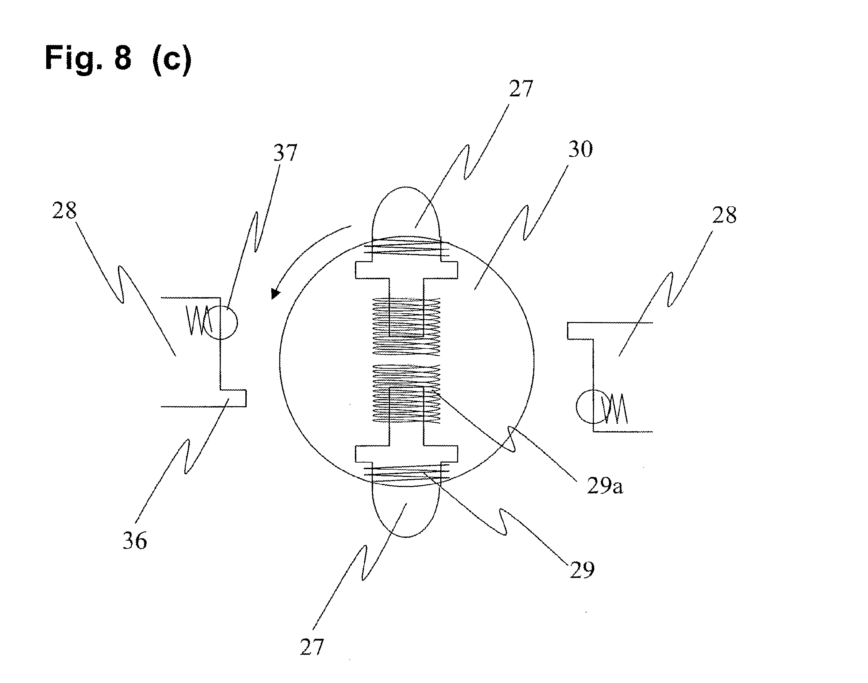

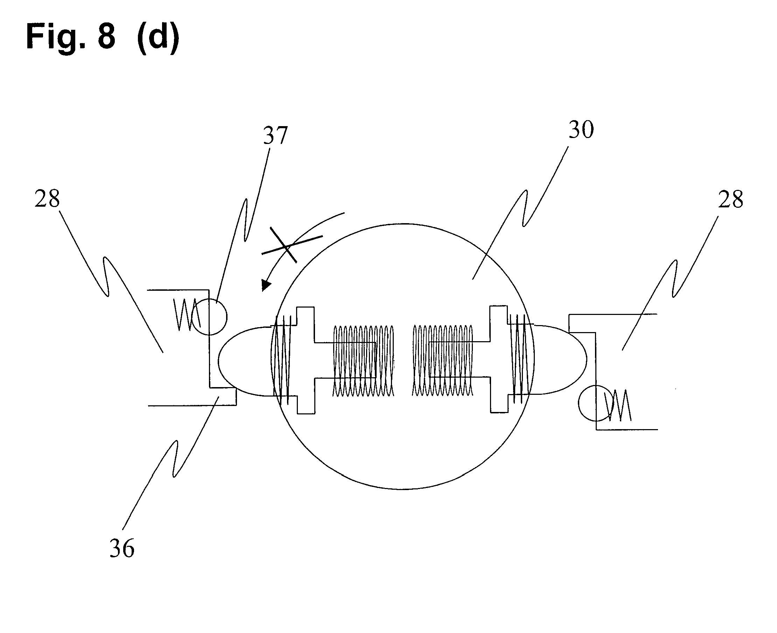

Figure 8 shows an embodiment of a disc drive similar to the embodiment of Figure 7, in which mechanical means are used to lock the rotating shaft 30 in a predefined rest position.

Figure 8(a) shows the shaft 30 in a cross-section along the rotational axis, with drive plate 31 and centering pin 32 engaged with a disc 9. Two cam elements 27 are retractably arranged on the shaft 30. During operation of the drive they are retracted into the shaft, and cannot interact with locking members (not shown) arranged around the shaft. After end of operation the cam elements 27 are released, preferably when the shaft reaches a lower limit of rotation velocity. This may be controlled mechanically by some sort of centrifugal mechanism.

The cam elements 27 will then stop the shaft 30 when they reach the corresponding lock elements, and the shaft is locked in a preferred position.

Figure 8(b) shows a possible embodiment of a shaft in a cross-section through the rotational axis. Spring elements 29 are arranged to keep the cam elements 27 retracted in the shaft as long as not electromagnets 29a are switched on and actively push the cam elements 27 outwards. This variant has the advantage that the shaft 30 cannot be accidentally blocked during operation, since the blocking procedure has to be activated. The locking elements 28 comprise a stopper 36 and a roller or ball element 37 which is pushed outwards by a spring element. The locking elements 28 are arranged in a way that they do not interact with the deactivated cam elements 27. After end of operation, the cam elements 27 are activated by switching on the electromagnets 29a (Fig. 8(c)). The cam elements 27 are pushed outwards. When a cam element 27 has passed the ball element it hits the stopper 36, thereby stopping the rotation of the shaft 30 (Fig. 8(d)).

Alternatively the cam elements can be pushed outwards by mechanical means instead of electromagnets, for example by a lever mechanism arranged within the shaft.

Another alternative embodiment comprises a shaft with fixed cam elements or similar means arranged on the shaft, and locking elements which can me moved from a neutral position to an active position.

In yet another embodiment of the method according to the invention, the data of one or several tracks of the optical disc, preferably the inner tracks, are read before the actual operation of the drive starts. The data are stored electronically, together with the corresponding shaft angle data. After end of operation the same tracks are read again. By comparison of the data with the initially stored data, the orientation of the shaft is determined, and the disc is rotated to the preferred position. The advantage of this embodiment of the method according to the invention is that it may be realized with no extra components.

In a variant of this method the absolute overall rotation angle of the shaft may be determined from the start to the end of operation. However, this solution bears the risk of the accumulation of measurement errors.

### List of Reference Symbols

- 1: disc tray
- 2: optical disc drive
- 3: opening
- 5: circular portion of the opening
- 6: long portion of the opening
- 7: center line of the opening
- 8: center of the disc
- 9: optical disc
- 11: light emitting element
- 12: optical sensor element
- 13: light beam
- 14: reflector element
- 15: sensor arm
- 16: edge
- 17: bearing
- 20: close point
- 22: supporting means
- 25, 25': first magnetic means
- 26, 26': second magnetic means
- 27: retractable cam element
- 28: locking element
- 29: spring element
- 29a: electromagnet
- 30: shaft
- 31: drive plate
- 32: centering pin
- 33, 33': tray base
- 34, 34': contour for standard circular discs
- 35: contour for rectangular discs
- 36: stopper
- 37: ball or roller element
- B, B', B", B'": magnetic field vector

## Claims

1. An optical disc drive (2) for optical discs (9), comprising a retractable disc tray (1) with an opening (3) and a tray base (33) on which a disc (9) with non-circular shape can be placed and centered by a user when the tray (1) is in a deployed position, and comprising a shaft (30) with drive plate (31) and centering pin (32), the shaft (30) being able to rotate the disc (9) when the tray (1) is in a retracted position during operation of the drive (2),
**characterized in that**
the drive comprises first means (25, 27) arranged on the shaft and second means (26, 28) arranged around the shaft, the first means and the second means being able to interact with each other, and to stop the rotating shaft (30) in a predefined end position.

2. The drive (2) according to claim 1, **characterized in that**
the first means comprises at least one first magnetic means (25, 25') arranged on the shaft (3), and the second means comprises at least one second magnetic means (26, 26') arranged in close proximity to the shaft (3) and the at least first magnetic means (25, 25').

3. The drive (2) according to claim 2, **characterized in that**
the at least one second magnetic means (26, 26') is an electromagnet.

4. The drive (2) according to claim 2, **characterized in that**
the at least second magnetic means is movable between a neutral position, where no interaction takes place between the first (25, 25') and the second (26, 26') magnetic means, and an active position, where interaction takes place.

5. The drive (2) according to claim 1, **characterized in that**
said first means comprises at least one cam element (27) arranged on the shaft (30), and said second means comprises at least one corresponding locking element (28) arranged in close proximity to the shaft (30), the locking element (28) being able to engage with the cam element (27) and to stop the rotating shaft (30) in a predefined end position.

6. The drive (2) according to claim 5, **characterized in that**
said cam element (27) is retractable.

7. An optical disc drive (2) for optical discs (9), comprising a retractable disc tray (1) with an opening (3) and a tray base (33) on which a disc (9) with non-circular shape can be placed and centered by a user when the tray (1) is in a deployed position, and comprising a shaft (30) with drive plate (31) and centering pin (32), the shaft (30) being able to rotate the disc (9) when the tray (1) is in a retracted position during operation of the drive (2),
**characterized in that**
the drive (2) comprises means (11, 12, 14, 15) for determining the relative orientation of the disc (9) with non-circular shape in relation to an absolute rotation angle of the shaft (30) bearing the disc (9), in order to enable the drive (2) to rotate the shaft (30) with disc (9) into a position, in which the tray can be safely deployed.

8. The drive (2) according to claim 7, **characterized in that**
said means comprise at least one sensor (12, 15).

9. The drive (2) according to claim 8, **characterized in that**
said at least one sensor is an optical sensor element (12) and that said means further comprise at least one light emitting element (11) positioned in a way that a light beam (13) from the light emitting element (12) can reach the optical sensor element (12) only for a certain range of all possible rotational orientations of the disc (9).

10. The drive (2) according to claim 9, **characterized in that**
the light emitting element (11) and the optical sensor element (12) are placed on opposite sides of the tray (1) in the retracted position.

11. The drive (2) according to claim 9, **characterized in that**
the light emitting element (11) and the optical sensor element (12) are placed on the same side of the tray (1) in the retracted position, and
that the means further comprise a reflector element (14) arranged on the side of the tray (1) facing said elements (11,12), enabling the light beam (13) emitted by the light emitting element (11) to reach the sensor element (12).

12. The drive (2) according to claim 8, **characterized in that**
said at least one sensor is an mechanical sensor (15) comprising at least one arm (15) capable of following the edge of said disc (9) during the rotation of the disc.

13. The drive (2) according to claim 12, **characterized in that**
said arm (15) is pivotable.

14. The drive (2) according to one of claims 7 to 13, **characterized in that** the said means are controlled by a micro-controller.

15. The drive (2) according to claim 13, **characterized in that**
the determined relative orientation of the disc (9) with non-circular shape in relation to the absolute rotation angle of the shaft (30) is used by the micro-controller to rotate the shaft to an absolute rotation angle at which the disc (9) is in a position fully overlapping with the tray base (33).

16. An optical disc drive (2) for optical discs (9), comprising a retractable disc tray (1) with an opening (3) and a tray base (33) on which a disc (9) with non-circular shape can be placed and centered by a user when the tray (1) is in a deployed position, and comprising a shaft (30) with drive plate (31) and centering pin (32), the shaft (30) being able to rotate the disc (9) when the tray (1) is in a retracted position during operation of the drive (2),
**characterized in that**
the drive (2) is comprising means (22) to support the disc (9) for at least a part of the opening (3) when the drive (2) is not in operation.

17. A drive (2) according to claim 16, **characterized in that**
the supporting means (22) comprise an arm or a plate.

18. A method for operating an optical disc drive (2) comprising a retractable disc tray (1) with an opening (3) and a tray base (33) on which a disc (9) with non-circular shape can be placed and centered by a user when the tray (1) is in a deployed position, and comprising a shaft (30) with drive plate (31) and centering pin (32), the shaft (30) being able to rotate the disc (9) when the tray (1) is in a retracted position during operation of the drive (2),
**characterized in that**
the method comprises the steps of:
- determining the relative orientation of the disc (9) in relation to an absolute rotational angle of the shaft (30); and
- rotating the shaft (30) to an angle at which the disc (9) is in a position which is safe for deployment of the tray (1).

19. The method according to claim 18, **characterized in that**
the determination of the relative orientation of the disc (9) comprises the steps of:
- measuring a signal as a function of the absolute rotational angle of the shaft (30), the signal being related to the non-circular shape of the disc (9); and
- determining an absolute rotational angle of the shaft (30) corresponding to a safe position of the disc (9), based on the measured signal.

20. The method according to claim 18, **characterized in that**
the determination of the relative orientation of the disc (9) comprises the steps of:
- determining the absolute rotational angle of the shaft (30) prior to operation of the drive (2) when the disc (9) is still in an initial position in which the tray (1) can be safely deployed;
- integrating the overall rotation angle of the shaft (39) during operation; and
- calculating the resulting absolute orientation of the disc (9) after end of operation.

21. The method according to claim 18, **characterized in that**
the determination of the relative orientation of the disc (9) comprises the steps of:
- determining the absolute rotational angle of the shaft (30) prior to operation of the drive (2) when the disc (9) is still in an initial position in which the tray (1) can be safely deployed;
- reading the data of at least one circular data track of the disc (9);
- storing the data together with data representing the absolute rotational angle of the shaft (30);
- reading the data of said at least one circular data track of the disc (9) after end of operation;
- comparing the data to the stored data; and
- calculating the resulting absolute orientation of the disc (9) after end of operation.
